# EUROPÄISCHE PATENTANMELDUNG

(11) **EP 3 263 961 A1**
(43) Veröffentlichungstag der Anmeldung: **03.01.2018**
(21) Anmeldenummer: 17171289.6
(22) Anmeldetag: 16.05.2017
(51) Int. Cl.: F16K 24/04, D06F 58/20, D06F 25/00

(54) **HÜLSE FÜR EIN ENTLÜFTUNGSVENTIL, ENTLÜFTUNGSVENTIL UND WASCHTROCKNER**

(30) Priorität: 28.06.2016 DE 102016111813
(71) Anmelder: Miele & Cie. KG, 33332 Gütersloh (DE)
(72) Erfinder: Dohmen, Anja, 33739 Bielefeld (DE); Makuc, Nadine, 33428 Marienfeld (DE); Diers, Martin, 33334 Gütersloh (DE)

(57) **Zusammenfassung**

Die Erfindung betrifft eine Hülse (200) zum Anordnen in einem Ventilkanal (210) eines Entlüftungsventils (102) für einen Waschtrockner, wobei die Hülse (200) einen gratfreien Ventilsitz (204) aufweist, der dazu ausgeformt ist, in eingebautem Zustand über eine Trennungsebene (208) des Entlüftungsventils (102) überzustehen.

## Beschreibung

Die Erfindung betrifft eine Hülse zum Anordnen in einem Ventilkanal eines Entlüftungsventils, ein Entlüftungsventil und einen Waschtrockner.

Bei einem Entlüftungsventil für einen Waschtrockner können produktionsbedingte Grate eine Dichtwirkung des Entlüftungsventils beeinträchtigen. Dadurch kann Flüssigkeit aus dem Entlüftungsventil austreten.

Der Erfindung stellt sich die Aufgabe, ein verbessertes Entlüftungsventil und einen verbesserten Waschtrockner bereitzustellen.

Erfindungsgemäß wird diese Aufgabe durch eine Hülse zum Anordnen in einem Ventilkanal eines Entlüftungsventils, ein Entlüftungsventil und einen Waschtrockner mit den Merkmalen der Hauptansprüche gelöst. Vorteilhafte Ausgestaltungen und Weiterbildungen der Erfindung ergeben sich aus den nachfolgenden Unteransprüchen.

Bei dem hier vorgestellten Ansatz wird ein Ventilsitz des Entlüftungsventils aus einem gratbehafteten Bereich heraus verlagert. Dazu wird eine gratfreie Hülse in einem Ventilkanal des Entlüftungsventils angeordnet. Ein Dichtkörper des Entlüftungsventils dichtet nun gegen die gratfreie Hülse ab.

Die mit der Erfindung erreichbaren Vorteile sind eine verbesserte Dichtwirkung des Entlüftungsventils und eine verbesserte Haltbarkeit des Dichtkörpers des Entlüftungsventils.

Es wird eine Hülse zum Anordnen in einem Ventilkanal eines Entlüftungsventils für einen Waschtrockner vorgestellt, wobei die Hülse einen gratfreien Ventilsitz aufweist, der dazu ausgeformt ist, in eingebautem Zustand über eine Trennungsebene des Entlüftungsventils überzustehen.

Ein Entlüftungsventil kann ein Spritzgussbauteil aus einem Kunststoffmaterial sein. Aufgrund einer Bauteilgeometrie kann eine Werkzeugteilungsebene beziehungsweise Trennungsebene im Bereich des Ventilkanals angeordnet sein und Grate hinterlassen. Unter einer Hülse kann ein Bauteil verstanden werden, das im Wesentlichen schlauchförmig beziehungsweise rohrähnlich ausgeführt ist und den Ventilsitz von der Trennungsebene weg verlagert. Eine mittig angeordnete Durchgangsöffnung der Hülse bildet dabei einen Strömungskanal des Ventils aus. Die Hülse kann einfach gratfrei hergestellt werden. Durch ein Überstehen der Hülse über die Trennebene hinaus und in einen Innenraum eines Ventilkörpers des Entlüftungsventils hinein kann eine hohe Dichtigkeit des Entlüftungsventils auch dann gewährleistet werden, wenn sich Grate im Bereich des Ventilkanals befinden.

Der Ventilsitz kann einen kreisförmigen Öffnungsquerschnitt aufweisen. Durch die Kreisform kann ein Verkanten des Dichtkörpers des Entlüftungsventils ausgeschlossen werden.

Der Ventilsitz kann an einem Ende eines hohlzylindrischen Abschnitts der Hülse angeordnet sein. Ein Außendurchmesser des Abschnitts kann im Wesentlichen einem Durchmesser des Ventilkanals entsprechen. Die Hülse kann schlauchförmig sein. Durch die zylindrische Form kann die Hülse eine hohe Steifigkeit aufweisen.

Weiterhin wird ein Entlüftungsventil für einen Waschtrockner vorgestellt, wobei das Entlüftungsventil einen Ventilkanal durch eine Trennungsebene und einen daran anschließenden Entlüftungsstutzen zum Anschließen eines Entlüftungsschlauchs aufweist, wobei in dem Ventilkanal eine Hülse gemäß dem hier vorgestellten Ansatz angeordnet ist und der Ventilsitz über die Trennungsebene übersteht.

Der Ventilkanal kann einen geringeren Durchmesser aufweisen, als der Entlüftungsstutzen. Die Hülse kann ferner in dem Entlüftungsstutzen angeordnet sein. Der Außendurchmesser der Hülse kann im Bereich des Entlüftungsstutzens im Wesentlichen dem Durchmesser des Entlüftungsstutzens entsprechen. Durch das Anordnen der Hülse auch im Entlüftungsstutzen kann ein fester Halt der Hülse im Ventilkanal und damit eine gute Dichtwirkung des Entlüftungsventils erreicht werden.

Das Entlüftungsventil kann eine elastische Ventilkugel zum Abdichten des Ventilsitzes aufweisen. Die Ventilkugel kann schwimmfähig sein und einen größeren Durchmesser aufweisen, als ein Öffnungsquerschnitt des Ventilsitzes. Eine Ventilkugel kann nicht am Ventilsitz verkanten. Durch die Elastizität ist die Ventilkugel resistent gegen Stöße. Durch die Elastizität kann der Ventilsitz in die Ventilkugel eingedrückt werden, was zu einer verbesserten Dichtwirkung führt.

Die Ventilkugel kann zumindest an einer Oberfläche ein Silikonmaterial aufweisen. Das Silikonmaterial ist belastbar und resistent gegen viele Chemikalien.

Die Ventilkugel kann eine Dichte kleiner als 0,8 g/cm³ aufweisen. Durch die geringe Dichte kann die Ventilkugel in Wasser schwimmen.

Die Ventilkugel kann gratfrei sein. Eine gratfreie Kugel kann eine verbesserte Dichtwirkung erreicht werden.

Ferner wird ein Waschtrockner mit einem Entlüftungsventil gemäß dem hier vorgestellten Ansatz vorgestellt, wobei das Entlüftungsventil zwischen einer Rücklaufsicherung des Waschtrockners und einem Einspülsiphon des Waschtrockners angeordnet ist, wobei ein Entlüftungsschlauch zu dem Einspülsiphon fluiddicht mit dem Entlüftungsstutzen verbunden ist.

Ein Ausführungsbeispiel der Erfindung ist in den Zeichnungen rein schematisch dargestellt und wird nachfolgend näher beschrieben. Es zeigt
- Figur 1: eine Darstellung eines Waschtrockners mit einem Entlüftungsventil gemäß einem Ausführungsbeispiel; und
- Figur 2: eine Schnittdarstellung durch ein Entlüftungsventil mit einer Hülse gemäß einem Ausführungsbeispiel.

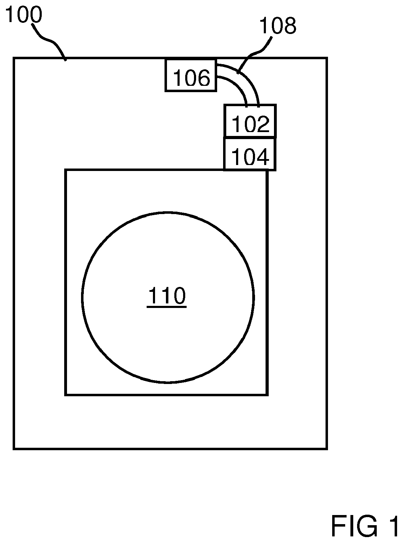

Figur 1 zeigt eine Darstellung eines Waschtrockners 100 mit einem Entlüftungsventil 102 gemäß einem Ausführungsbeispiel. Das Entlüftungsventil 102 ist zwischen einer Rücklaufsicherung 104 des Waschtrockners 100 und einem Einspülsiphon 106 des Waschtrockners 100 angeordnet. Dabei ist ein Entlüftungsschlauch 108 zu dem Einspülsiphon 106 fluiddicht mit einem Entlüftungsstutzen des Entlüftungsventils 102 verbunden.

Der Waschtrockner 100 ist ein Hausgerät zum Waschen und Trocknen von Wäsche. Dabei kann die Wäsche nach dem Waschen in einer Trommel 110 des Waschtrockners 100 verbleiben, während der Waschtrockner 100 auf das Trocknen umschaltet.

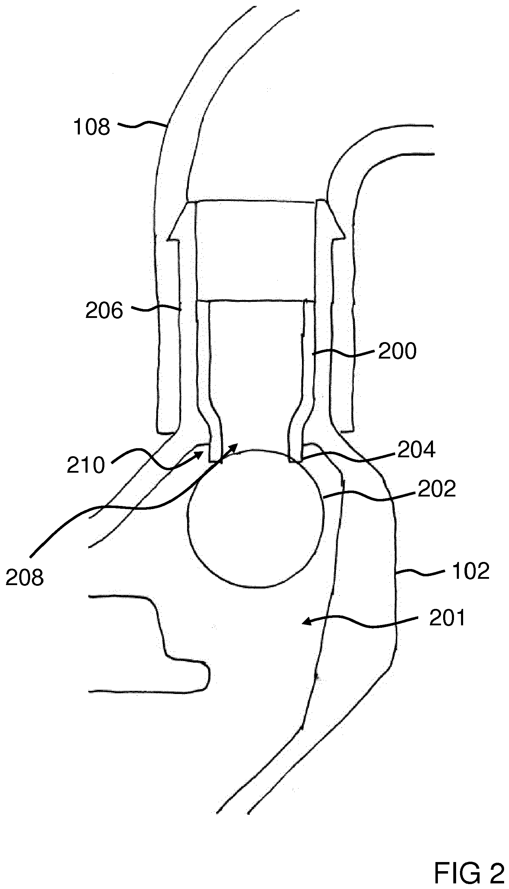

Figur 2 zeigt eine Schnittdarstellung durch ein Entlüftungsventil 102 mit einer Hülse 200 gemäß einem Ausführungsbeispiel. Das Entlüftungsventil 102 entspricht dabei im Wesentlichen dem Entlüftungsventil in Figur 1. Das Entlüftungsventil 102 weist eine in einem Innenraum 201 eines Ventilkörpers des Entlüftungsventils 102 angeordnete schwimmfähige Ventilkugel 202 auf, die dazu ausgebildet ist, das Entlüftungsventil 102 zu verschließen, wenn sie durch in dem Innenraum 201 vorhandene Flüssigkeit gegen einen Ventilsitz 204 des Entlüftungsventils 102 angedrückt wird. Wenn die Ventilkugel 202 nicht angedrückt wird, schwimmt sie an einer Flüssigkeitsoberfläche und über der Flüssigkeit angesammelte Luft kann durch den Entlüftungsschlauch 108 entweichen. Die Ventilkugel 202 ist größer als ein Strömungsquerschnitt des Entlüftungsventils 102 und gratfrei ausgeführt.

Der Entlüftungsschlauch 108 ist fluiddicht mit einem Entlüftungsstutzen 206 des Entlüftungsventils 102 verbunden. Der Entlüftungsstutzen 206 geht in einen Ventilkanal 210 des Entlüftungsventils 102 über. Der Ventilkanal 210 führt durch eine Trennungsebene 208 des Entlüftungsventils 102. Der Entlüftungsstutzen 206 weist einen größeren Innendurchmesser auf, als der Ventilkanal 210.

Die Hülse 200 ist in dem Entlüftungsstutzen 206 angeordnet und erstreckt sich durch den Ventilkanal 210 hindurch. Die Hülse 200 ist im Wesentlichen röhrenförmig und liegt an einer Innenwand des Entlüftungsstutzens 206 und des Ventilkanals 210 an. Eine Außenkontur der Hülse 200 ist an eine auf Höhe der Hülse 200 liegende Innenkontur des Entlüftungsstutzens 206 und des Ventilkanals 210 angepasst, sodass die Hülse 200 und der Entlüftungsstutzen 206 und der Ventilkanal 210 fluiddicht, insbesondere wasserdicht, miteinander verbunden sein können. Ein dem Innenraum 201 zugewandtes Ende der Hülse 200 ragt über die Trennungsebene 208 aus dem Ventilkanal 210 hervor und in den Innenraum 201 hinein. Durch das in den Innenraum 201 hineinragende Ende der Hülse 200 wird der Ventilsitz 204 des Entlüftungsventils 102 ausgeformt. Dabei ist eine Außenwand des Ventilsitzes 204 beabstandet zu einer den Innenraum 201 ausformenden Innenwand des Ventilkörpers angeordnet, sodass der Ventilsitz 204 frei stehend in den Innenraum 210 hineinragt.

Das aus dem Ventilkanal 210 ragende Ende der Hülse 200 ist gratfrei und rund. Dadurch kann sich zwischen der Ventilkugel 202 und der Hülse 200 eine fluiddichte Abdichtung ausbilden.

In einem Ausführungsbeispiel ist zumindest eine Oberfläche der Ventilkugel 202 aus einem elastischen Material. Dabei kann die Ventilkugel 202 eine Vollkugel oder eine Hohlkugel sein. Ebenso kann die Ventilkugel 202 eine Hülle aus dem elastischen Material aufweisen. Durch das elastische Material kann sich der Ventilsitz 204 in die Ventilkugel 202 eindrücken und eine Dichtfläche zwischen der Hülse 200 und der Ventilkugel 202 vergrößern.

Das elastische Material kann beispielsweise ein Silikonmaterial sein, das mechanisch und thermisch belastbar, sowie chemisch beständig gegen Inhaltsstoffe der Flüssigkeit ist.

Mit anderen Worten zeigt Figur 2 eine verlängerte Hülse 200 an einer Kugeldichtung und eine Abdichtung der Entlüftung über eine Kugel 202 aus modifiziertem Material.

Das Ablaufsystem von Waschautomaten mit Laugenpumpe weist eine Entlüftung am höchsten Punkt auf. Bei dem hier vorgestellten Ansatz werden hoch beständige Materialien verwendet. So können Undichtigkeiten, die den Trockenprozess massiv stören würden, verhindert werden.

Die Rücklaufsicherung 102 ist über einen Entlüftungsschlauch 108 an den Einspülsiphon angeschlossen. Wird Wasser bis zum Entlüftungsstutzen 206 gepumpt, verschließt eine Kugel 202 den Stutzen 204. Die Elastizität des verwendeten Materials verhindert eine Geräuschentwicklung beim Abdichten.

Die verwendete Kugel 202 besteht auch über lange Zeit die erhöhten Anforderungen im Waschtrockner.

Im Unterschied zu einem herkömmlichen Entlüftungsventil, bei dem als Material thermoplastisches Polyethylen TPE verwendet wird, kann gemäß dem hier beschriebenen Ansatz gewährleistet werden, dass die Kugel sehr schnell schließt. Zudem kann der Problematik entgegengewirkt werden, dass die Kugel wegen Unrundheit und gratbehafteter Dichtungsebene nicht dicht genug schließen könnte. Somit wird Leckwasser vermieden, das den Trocknungsprozess stören könnte, indem die Wäsche erneut befeuchtet würde.

Somit wird gemäß dem hier beschriebenen Ansatz ein Abdichtungsprinzip vorgestellt, das die speziellen Anforderungen für den Waschtrockner erfüllt und mit einer vorhandenen Rücklaufsicherung 102 umgesetzt werden kann.

Eine Kugel 202 aus geeignetem Material verschließt den Stutzen 204 sehr schnell und durch eine genaue Rundheit und geringe Härte auch sehr dicht. Zusätzlich ist das Material auch im Waschtrockner beständig und trotzdem elastisch, sodass keine Klappergeräusche entstehen können.

Die Kugel 202 kann auf der vorhandenen Anlage in die bestehende Rücklaufsicherung 102 eingebaut werden. Zusätzlich wird eine Hülse 200 in die Rücklaufsicherung 102 eingeschoben. Die Hülse 200 garantiert eine gratfreie Abdichtungsebene 204.

Dabei wird ein modifiziertes Silikon mit geringer Dichte eingesetzt. Um die geforderte Dichtigkeit des Systems zu erreichen, kann eine Dichte des Materials kleiner 0,8 g/cm³ verwendet werden.

Die eingeschobene Hülse 200 reduziert zusätzlich das Leckwasser.

Die geringe Dichte erlaubt einen schnelleren Aufstieg der Kugel 202. Durch das Fertigungsverfahren für Flüssigsilikon zeigt die Kugel 202 wesentlich kleinere Abweichungen der Rundheit. Das Material ist beständiger und langlebiger als das TPE.

Die Hülse 200 ermöglicht eine gratfreie Abdichtung, ohne in das Werkzeugkonzept der vorhandenen Rücklaufsicherung 102 einzugreifen.

## Patentansprüche

1. Hülse (200) zum Anordnen in einem Ventilkanal (210) eines Entlüftungsventils (102) für einen Waschtrockner (100), wobei die Hülse (200) einen gratfreien Ventilsitz (204) aufweist, der dazu ausgeformt ist, in eingebautem Zustand über eine Trennungsebene (208) des Entlüftungsventils (102) überzustehen.

2. Hülse (200) gemäß Anspruch 1, bei der der Ventilsitz (204) einen kreisförmigen Öffnungsquerschnitt aufweist.

3. Hülse (200) gemäß einem der vorhergehenden Ansprüche, bei der der Ventilsitz (204) an einem Ende eines hohlzylindrischen Abschnitts der Hülse (200) angeordnet ist, wobei ein Außendurchmesser des Abschnitts im Wesentlichen einem Durchmesser des Ventilkanals (210) entspricht.

4. Entlüftungsventil (102) für einen Waschtrockner (100), wobei das Entlüftungsventil (102) einen Ventilkanal (210) durch eine Trennungsebene (208) und einen daran anschließenden Entlüftungsstutzen (206) zum Anschließen eines Entlüftungsschlauchs (108) aufweist, wobei in dem Ventilkanal (210) eine Hülse (200) gemäß einem der Ansprüche 1 bis 3 angeordnet ist und der Ventilsitz (204) über die Trennungsebene (208) übersteht.

5. Entlüftungsventil (102) gemäß Anspruch 4, bei dem der Ventilkanal (210) einen geringeren Durchmesser aufweist, als der Entlüftungsstutzen (206), wobei die Hülse (200) ferner in dem Entlüftungsstutzen (206) angeordnet ist und der Außendurchmesser der Hülse (200) im Bereich des Entlüftungsstutzens (206) im Wesentlichen dem Durchmesser des Entlüftungsstutzens (206) entspricht.

6. Entlüftungsventil (106) gemäß einem der vorhergehenden Ansprüche, mit einer elastischen Ventilkugel (202) zum Abdichten des Ventilsitzes (204), wobei die Ventilkugel (202) schwimmfähig ist und einen größeren Durchmesser aufweist, als ein Öffnungsquerschnitt des Ventilsitzes (204).

7. Entlüftungsventil (102) gemäß Anspruch 6, bei dem die Ventilkugel (202) zumindest an einer Oberfläche ein Silikonmaterial aufweist.

8. Entlüftungsventil (102) gemäß einem der Ansprüche 6 bis 7, bei dem die Ventilkugel (202) eine Dichte kleiner als 0,8 g/cm³ aufweist.

9. Entlüftungsventil (102) gemäß einem der Ansprüche 6 bis 8, bei dem die Ventilkugel (202) gratfrei ist.

10. Waschtrockner (100) mit einem Entlüftungsventil (102) gemäß einem der Ansprüche 4 bis 9, wobei das Entlüftungsventil (102) zwischen einer Rücklaufsicherung (104) des Waschtrockners (100) und einem Einspülsiphon (106) des Waschtrockners (100) angeordnet ist, wobei ein Entlüftungsschlauch (108) zu dem Einspülsiphon (106) fluiddicht mit dem Entlüftungsstutzen (206) verbunden ist.
